# EUROPEAN PATENT APPLICATION

(11) **EP 0 653 380 A1**
(43) Date of publication of application: **17.05.1995**
(21) Application number: 94117523.4
(22) Date of filing: 07.11.1994
(51) Int. Cl.: C02F 3/12, C02F 3/20

(54) **Oxygenation device for water treatment plants**

(30) Priority: 12.11.1993 IT UD930226
(71) Applicant: Battigelli, Giuseppe, I-33072 Casarsa della Delizia (PN) (IT); Battigelli, Lucilla, I-33072 Casarsa della Delizia (PN) (IT)
(72) Inventor: Battigelli, Giuseppe, I-33072 Casarsa Della Delizia (PN) (IT)
(74) Representative: Petraz, Gilberto Luigi

(57) **Abstract**

Oxygenation device for water treatment plants, which cooperates with, and within, aeration tanks (11) and is positioned substantially vertically and comprises a first upper chamber (23a) and at least one second lower chamber (23b), the first chamber (23a) and second chamber (23b) being separated by partition means (24-26) which define an acceleration cleft (25), the first upper chamber (23a) comprising at its upper upstream end an adjustable weir (18) and at its upper downstream end a deviation wall (15), the second lower chamber (23b) comprising at its lower upstream side a closure wall (14a) and at its lower downstream end at least one passage-way (22), the lower part of the second lower chamber (23b) including means to deliver and diffuse air/oxygen (28).
System to operate and control a water treatment plant, which comprises an operating, controlling and programming assembly that governs at least the means controlling the delivery of oxygen.

## Description

This invention concerns an oxygenation device for water treatment plants, as set forth in the main claim.

The oxygenation device according to the invention is applied to aeration tanks containing waters which have to be treated before discharge, whether those waters are of a household origin, an industrial origin, an agricultural origin or combined origins.

The oxygenation device according to the invention is applied also to aeration tanks containing waters to be treated for re-use in other fields.

Plants have been disclosed for the treatment of waters which have to be treated before being discharged or being re-used, such plants comprising a plurality of tanks positioned in series, through which the water is caused to run and generally passes from one tank to the next tank by gravity.

In a treatment step it is generally necessary to increase the concentration of oxygen in the water for various reasons, amongst which is the avoidance of anaerobic phenomena with the emission of evil smells.

The oxygenation devices of the state of the art are employed in the aeration tanks of the plants to treat water before discharge or of plants to treat water for re-use, the purposes being to provide the oxygen required for the aerobe bacteria which attack the organic biodegradable substances, to oxidise the inorganic reducing substances, to volatilise and therefore to remove from the solutions the harmful substances such as ammonia, hydrogen sulphide, hydrocyanic acid, acetone, etc. and to separate suspended or emulsified substances so as to enhance flotation.

Various methods have been disclosed which are commonly used in the process of oxygenating the water.

A first method consists in carrying out the oxygenation by gravity by causing the water to fall by gravity through columns which are advantageously equipped with internal obstructions, which have the task of fractionating the water by making it meet in countercurrent a flow of forced draught blown upwards from below. This system, however, requires a great space and high costs and the efficiency of the air/water exchange is very low.

A second method consists in the mechanical aeration of the water, for instance by means of rotary cylindrical brushes fitted horizontally and semi-submersed, these brushes stirring the water and spraying an appreciable quantity of the water into the air, thus enhancing the exchange with the air.

Other systems include the use of turbine aeration means to diffuse the oxygen in the water, but these systems atomise the water partially by putting in suspension in the air small particles of water and this situation, in the case of water to be treated before discharge, is hygienically not advisable for health reasons and also because of the evil smells given off.

Another method consists in bubbling air or oxygen through the mass of water; various devices have been disclosed for achieving this bubbling, amongst which we may note devices working with diffusion of air, whereby the air is pumped into the mass of water by means of perforated tubes or porous plates. This system, however, requires great quantities of air and it should be noted that the oxygen content in the water becomes quickly smaller as soon as the zone of immission of the air is left. This fact is due to incorrect diffusion of the oxygen in the water.

With a view to improving the diffusion of the oxygen in the water, oxygenating means have been disclosed whereby a part of the water to be treated is re-circulated by a pump and is forced into the oxygenating means.

This current under pressure leads to a zone of turbulent motion which results in a condition of cavitation and therefore, if this zone is put in communication with the outer environment, the zone aspirates the air, which is vigorously and intimately mixed with the water.

The traditional systems of injecting the oxygen, in fact, involve the problem that the injected oxygen is not diluted enough in the water and is not uniformly diffused throughout the whole tank.

It has been noted that it is only in the neighbourhood of the chamber of injection of the oxygen that the oxygen content is greater than the required minimum and that this content decreases quickly below the threshold value to be ensured as soon as the water is distanced from the injection chamber.

The oxygenation methods of the state of the art, therefore, are unable to ensure the required minimum content of oxygen in water which thereafter undergoes purification treatment.

The present applicants have designed, tested and embodied this invention to overcome the shortcomings of the state of the art and to achieve further advantages.

This invention is set forth and characterised in the main claim, while the dependent claims describe variants of the idea of the main embodiment.

This invention enables a substantially homogeneous distribution of the oxygen content to be ensured within the water contained in the aeration tanks of a plant to treat waters which are thereafter to be discharged or re-used.

The device according to the invention enables the correct oxygen content to be adjusted and always ensured in the water contained in each single tank in a simple manner with modest costs.

The device according to the invention creates a transverse barrier within the aeration tank through which the water to be treated runs.

This barrier consists advantageously of a plurality of aligned modules connected together removably and closing the tank transversely.

Where the tanks are especially long, a plurality of barriers can be fitted which are suitably distanced apart lengthwise within the same tank. These modules can be removed individually, thus facilitating the operations of handling, cleaning and installing the barrier.

Each of the modules includes a first upper chamber for calm conditions and at least one second lower oxygenation chamber.

The chambers are separated by mixing means which accelerate the water with an adjustable movable partition, these means defining an acceleration cleft.

According to a variant, more than two chambers are included, the upper chamber acting as a chamber for calm conditions, whereas the lower chambers are superimposed on each other and act as oxygenation chambers.

In this form of embodiment the acceleration and mixing means through which the water passes in running from one chamber to another chamber positioned immediately below are advantageously located offset from each other.

In this way the flow of water is constrained to follow a more complex path, which ensures a minimum stay time within each oxygenation chamber and prevents the formation of substantially straight preferred paths.

According to another variant the oxygenation chambers include deviation means which compel the flow of water to follow an obligatory path, which ensures a more intimate mixing of water with air or oxygen and therefore a better diffusion of the air or oxygen in the water.

The upper chamber of calm conditions is open at its upper upstream end so as to receive the water arriving and is equipped with an adjustable weir to regulate the quantity of water entering.

The lower oxygenation chamber positioned in the lower zone is closed at its upstream end and has a downstream opening in a lower position.

This lower oxygenation chamber includes in its length means to diffuse air or oxygen; these means to diffuse air or oxygen are associated with means to regulate the flow and possibly also with means to regulate the pressure.

These means to diffuse the air or oxygen are positioned in the lower part of each lower oxygenation chamber.

By means of this embodiment the air or oxygen, which is already in the form of very small bubbles or micro-bubbles and which is not diffused immediately in the water, rises in countercurrent and is stressed by a mechanical action of compression and diffusion.

If the air or oxygen rises up to the acceleration and mixing means including the movable partition, the Venturi effect of the accelerated water or the turbulence at the sides created by that effect enhances the diffusion of the air or oxygen in the water.

It should be borne in mind that the present applicants have found that the lower the injection pressure is, the better the diffusion of oxygen in the water is.

The pressure and rate of flow of the oxygen immitted are a function of the pollutant load in the water to be treated and of the chemical and physical properties of the water.

In the oxygenation device according to the invention the water increases its speed on passing through the acceleration cleft with a reduced cross-section, and turbulence is created which enhances the intimate mixing of the water with the countercurrent of oxygen.

This mixing assists the diffusion of the micro-bubbles of oxygen in the water and the movable partition means prevent the oxygen rising further towards the free surface of the water.

The device according to the invention ensures that the water leaving the lower oxygenation chamber through the passage-way contains the required oxygen content and that such oxygen content, being diffused in the form of micro-bubbles, is kept above the minimum desired threshold value even at points in the tank distant from the barrier.

So as to optimise and make uniform the distribution and diffusion of the oxygen in the water, the parameters available to the plant operator are the pressure and rate of flow of the immitted oxygen, the height of the inflow weir for the intake of water into the upper chamber of calm conditions and the width of the acceleration clefts through which the water passes in being transferred from one chamber to the chamber below.

The device according to the invention can be associated with means to measure the oxygen content in the water, these means being positioned upstream and downstream of the barrier so as to measure the correct oxygen content in the water.

According to a variant the oxygenation device according to the invention is governed by an operating, controlling and programming assembly.

This operating, controlling and programming assembly adjusts, according to the data received from the means measuring the oxygen content in the water and positioned upstream and downstream of the barrier, the height of the intake weir, the width of the acceleration cleft between the chambers and the pressure and rate of flow of the oxygen immitted.

According to another variant a means is included to measure the temperature of the water, this means being connected to the operating, controlling and programming assembly.

The attached figures are given as a non-restrictive example and show some preferred embodiments of the invention as follows:-
- Fig.1: is a plan view of an automatic oxygenation device according to the invention as fitted to an aeration tank of a water treatment plant;
- Fig.2: shows a three-dimensional view of a partly cutaway barrier according to the invention;
- Fig.3: shows in an enlarged scale a cross-section of the barrier along the line A-A of Fig.1;
- Figs.4a and 4b: show two possible forms of embodiment of the means that diffuse oxygen;
- Fig.5: shows a variant of the device of Fig.3.

The reference number 10 in the attached figures denotes generally a water oxygenation device for a plant to treat waters to be discharged thereafter or to be re-used according to the invention.

The oxygenation device 10 according to the invention is fitted to an aeration tank 11 of a water treatment plant.

The oxygenation device 10 according to the invention consists of a substantially vertical barrier 12, which is fitted transversely to the tank 11 and advantageously at a right angle to the lengthwise axis of the tank 11 and therefore to the flow of water.

The barrier 12 consists advantageously of a plurality of modules 13 assembled together removably so as to facilitate their handling, installation and dismantling and also the cleaning operations; this barrier 12 is fitted with a seal engagement against the lateral edges of the tank 11 and consists of two walls, which are respectively an upstream wall 14a and a downstream wall 14b and which are parallel to each other and suitably spaced apart to define an intermediate chamber 23.

In the description that follows the words "upstream" and "downstream" shall be understood as referring to the direction of flow of the water in the tank 11.

The upstream wall 14a is installed with a seal engagement between its lower edge 16 and the bottom 17 of the tank 11 and includes an auxiliary wall portion 18 able to slide vertically and cooperating with the upper part 19 of the upstream wall 14a and protruding thereabove.

This auxiliary wall portion 18 acts as a weir for the inflow of water pouring into the chamber 23 and can be adjusted for height and is actuated in this case by a first actuator 20.

The downstream wall 14b is installed with its lower edge 21 raised above the bottom 17 of the tank 11 by a desired determined distance so as to leave a passage-way 22 through which the water leaving the intermediate chamber 23 runs.

The downstream wall 14b extends upwards above the surface of the water so as to form a deviation wall 15, which prevents the water poured into the intermediate chamber 23 from passing over the deviation wall 15 into the downstream portion of the tank 11.

The intermediate chamber 23 is divided into at least two chambers, one above the other, namely an upper chamber 23a of calm conditions and a lower oxygenation chamber 23b respectively, separated by a partition 24 fitted transversely to the walls 14.

This partition 24 defines an acceleration cleft 25 of a reduced width, in which the water is accelerated during its movement from the upper chamber 23a of calm conditions to the lower oxygenation chamber 23b.

The width of the acceleration cleft 25 can be adjusted advantageously to alter the speed of flow of the water and to create a desired degree of turbulence.

In this case the adjustment of the width of the acceleration cleft 25 is carried out by an auxiliary partition 26 extending along the whole length of the partition 24 and able to move perpendicularly thereto.

In this case the auxiliary partition 26 is actuated by a second actuator 27.

Means 28 to deliver air/oxygen are included in the lower oxygenation chamber 23b and inject oxygen at a low pressure.

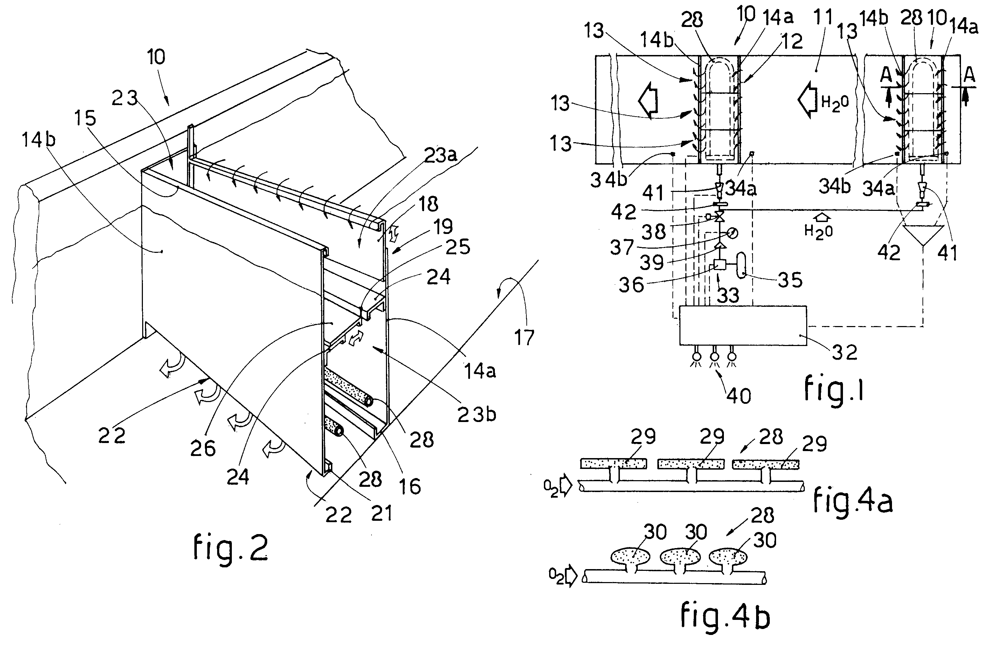

These delivery means 28 in Figs.2 and 3 consist of tubes 29 containing micro-perforations, from which micro-bubbles of air/oxygen flow.

According to the variants shown in Figs.4a and 4b the delivery means 28 include a plurality of diffusors 29 containing micro-perforations or a plurality of mushroom-shaped heads 30 containing micro-perforations and associated with a duct distributing air/oxygen so as to diffuse the micro-bubbles of air/oxygen as uniformly as possible.

It should be noted that with the oxygenation device 10 according to the invention the results obtained are best when the pressure of injection of the air/oxygen is low.

According to the variant shown in Fig.3 the partition 24 is fitted at an incline to the horizontal so as to define a pointed space 31 in which there may collect the oxygen which has been freed and which is re-mixed with the water discharged through the acceleration cleft 25.

In fact the Venturi effect created by the acceleration of the water passing through the acceleration cleft 25 and the turbulence created at the sides of this acceleration cleft 25 enhance and stimulate the diffusion of oxygen in the water.

In the device 10 according to the invention the water, after having passed through the first upper chamber 23a of calm conditions, passes through the acceleration cleft 25, in which it is accelerated so as to create a turbulent motion that improves the conditions of absorption of the oxygen diffused in the lower oxygenation chamber 23b.

With the oxygenation device 10 according to the invention the consumption of oxygen is therefore very limited, while always ensuring a content of oxygen in the water higher than a minimum determined value.

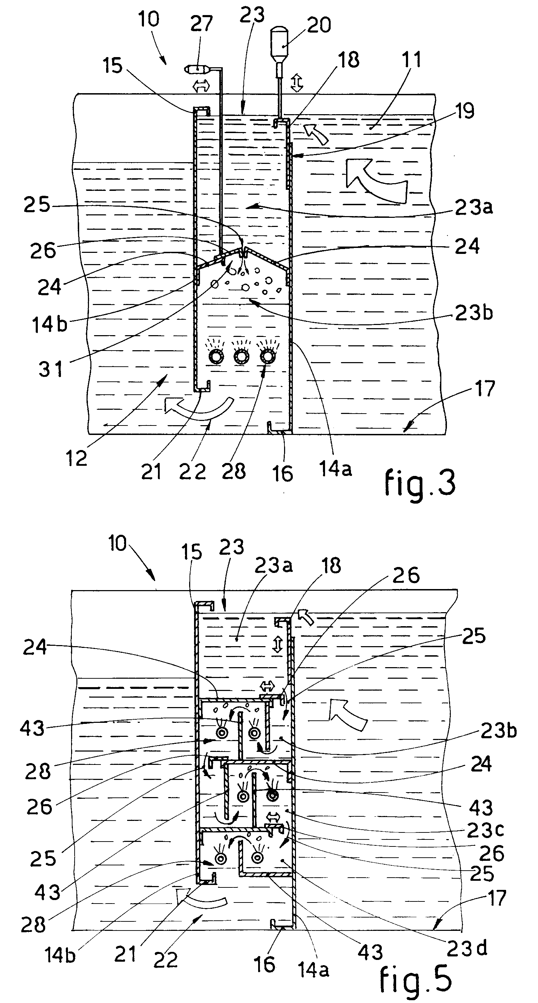

According to a variant shown in Fig.5 the intermediate chamber 23 is divided into a plurality of superimposed chambers and, in particular, in this case includes an upper chamber 23a of calm conditions and three lower respective oxygenation chamber 23b-23c and 23d positioned in series.

Each chamber 23 is separated from the chamber below itself by a partition 24 that defines together with a movable partition 26 an acceleration cleft 25.

So as to make the drawing clearer, we have not shown in the figure 5 the actuators 20 and 27, which actuate respectively the weir 18 and the movable partitions 26.

The acceleration clefts 25 are advantageously offset from each other so as to enhance the exchange between the water and air.

So as to enhance still more the mixture of the water with the oxygen and to increase the efficiency of the diffusion, the oxygenation chambers 23b, 23c and 23d include deviation means 43, which are positioned crosswise to the direction of flow of the water and constrain the water to follow a complex path, thus preventing the creation of preferred paths.

Fig.1 shows a tank 11, in which the water to be treated runs and which includes a first oxygenation device 10 according to the invention installed at the beginning of the tank 11 and also a second oxygenation device 10 according to the invention installed at an intermediate position in the tank 11.

In this case the oxygenation devices 10 according to the invention are automated by means of a plurality of auxiliary means which make the working of the devices and their adjustment completely automatic.

In this case an operating, controlling and programming assembly 32 is associated with the oxygenation devices 10 according to the invention and regulates the working of the plant 33 feeding the air/oxygen to the means 28 which deliver air/oxygen and which are immersed in the oxygenation chambers 23b of the tank 11.

In this example the plant 33 feeding air/oxygen comprises a tank 35 to store oxygen under pressure, an assembly 36 to reduce the pressure, a pressure gauge 37, a shut-off valve 38 and a flow regulator assembly 39.

In the plant of Fig.1 the means 28 delivering and diffusing air/oxygen in the lower oxygenation chamber 23b of each oxygenation device 10 installed in the various tanks 11 include their own assembly 42 to control and regulate pressure and their own assembly 41 to regulate the rate of flow. In this way it is possible to regulate the immission of oxygen into each single tank and also into determined zones of each tank according to the properties of the water in that zone of the individual tank and possibly also to halt the immission of oxygen into tanks 11 in which the oxygen content is greater than the required minimum.

This regulation takes place on the basis of signals which oxygen measuring means 34 installed respectively upstream 34a and downstream 34b of the barrier 12 send to the operating, controlling and programming assembly 32.

As we said above, so as to prevent any waste of oxygen when all the tanks 11 have a concentration of oxygen, as measured upstream of the barrier 12, greater than the desired value, the operating, controlling and programming assembly 32 causes closure of the shut-off valve 38 fitted to the plant 33 that feeds the oxygen.

According to a variant the operating, controlling and programming assembly 32 governs also the means, consisting in this case of the actuators 20 and 27, which regulate the height of the auxiliary wall portion 18 and of the auxiliary partition 26 which regulate the hydraulic conditions of the tank 11.

According to yet another variant the operating, controlling and programming assembly 32 is equipped with a plurality of warning means 40 of an acoustic and/or visual type, which notify anomalies or incorrect working of the plant.

## Claims

1. Oxygenation device for water treatment plants, which cooperates with, and within, aeration tanks (11) and is characterised in that it is positioned substantially vertically and comprises a first upper chamber (23a) and at least one second lower chamber (23b), the first chamber (23a) and second chamber (23b) being separated by partition means (24-26) which define an acceleration cleft (25), the first upper chamber (23a) comprising at its upper upstream end an adjustable weir (18) and at its upper downstream end a deviation wall (15), the second lower chamber (23b) comprising at its lower upstream side a closure wall (14a) and at its lower downstream end a passage-way (22), the lower part of the second lower chamber (23b) including means to delivery and to diffuse air/oxygen (28).

2. Oxygenation device as in Claim 1, in which the separating partition means (24) include an adjustable movable partition (26).

3. Oxygenation device as in Claim 1 or 2, in which the delivery and diffusing means (28) are tubes containing micro-perforations (Fig.1).

4. Oxygenation device as in Claim 1 or 2, in which the delivery and diffusing means (28) are mushroom-shaped heads (30) containing micro-perforations (Fig.4b).

5. Oxygenation device as in Claim 1 or 2, in which the delivery and diffusing means (28) are diffusors (29) containing micro-perforations (Fig.4a).

6. Oxygenation device as in any claim hereinbefore, in which the means (28) delivering and diffusing oxygen cooperate at least with a means (39) to regulate the rate of flow of oxygen.

7. Oxygenation device as in any claim hereinbefore, in which the means (28) delivering and diffusing oxygen cooperate at least with a means (42) to regulate the pressure of oxygen.

8. Oxygenation device as in any claim hereinbefore, in which the adjustable movable partition (26) is powered by actuator drive means (27).

9. Oxygenation device as in any claim hereinbefore, in which the weir (18) is powered by actuator drive means (20).

10. Oxygenation device as in any claim hereinbefore, which is formed with modules (13) that cooperate laterally with each other.

11. Oxygenation device as in any claim hereinbefore, which includes a plurality of lower oxygenation chambers (23b-23c-23d) positioned in series and communicating with each other through acceleration clefts (25), which are defined by the partition means (24-26) and are positioned offset in relation to each other.

12. Oxygenation device as in any claim hereinbefore, in which at least one lower oxygenation chamber (23b-23c-23d) includes means (43) to deviate the flow of water.

13. System to operate and control a water treatment plant, which is characterised in that it comprises an operating, controlling and programming assembly (32) that governs at least the means controlling the delivery of oxygen (39-41-42).

14. Operating and controlling system as in Claim 13, in which the operating, controlling and programming assembly (32) governs an actuator means (27) associated with an adjustable movable partition (26).

15. Operating and controlling system as in Claim 13 or 14, in which the operating, controlling and programming assembly (32) governs an actuator means (20) associated with a movable weir (18).

16. Operating and controlling system as in any of Claims 13, 14 or 15, in which the operating, controlling and programming assembly (32) is associated at least with an oxygen measuring means (34) positioned downstream of the oxygenation device (10) according to the invention.
